# EUROPÄISCHE PATENTSCHRIFT

(11) **EP 1 151 219 B1**
(45) Veröffentlichungstag und Bekanntmachung des Hinweises auf die Patenterteilung: **14.05.2003**
(21) Anmeldenummer: 00910630.3
(22) Anmeldetag: 31.01.2000
(51) Int. Cl.: F16K 31/08, F16K 31/06, G05D 16/20

(54) **PROPORTIONAL-DRUCKREGELVENTIL**
PROPORTIONAL CONTROL PRESSURE VALVE
SOUPAPE PROPORTIONNELLE DE REGULATION DE LA PRESSION

(30) Priorität: 06.02.1999 DE 19904901
(43) Veröffentlichungstag der Anmeldung: 07.11.2001
(73) Patentinhaber: ZF FRIEDRICHSHAFEN Aktiengesellschaft, 88038 Friedrichshafen (DE)
(72) Erfinder: MAYR, Karlheinz, D-88142 Wasserburg (DE); EISELE, Markus, D-88048 Friedrichshafen (DE); SCHMIDT, Thilo, D-88074 Meckenbeuren (DE); KILL, Walter, D-88046 Friedrichshafen (DE); REMMLINGER, Hubert, D-88046 Friedrichshafen (DE); FISCHER, Jochen, D-88046 Friedrishafen (DE); INGENBLEEK, Robert, D-88079 Kressbronn (DE)
(86) Internationale Anmeldenummer: EP0000731
(87) Internationale Veröffentlichungsnummer: WO00046534

(56) Entgegenhaltungen:
- WO-A-98/48332
- DE-A- 3 844 412
- DE-A- 19 719 557
- US-A- 5 067 524

## Beschreibung

Die Erfindung betrifft ein Proportional-Druckregelventil mit einer Druckreduzier- und einer Druckhaltefunktion. Das Ventil besteht im wesentlichen aus einem Ventilgehäuse mit Zu- und Ablauföffnungen, einem Steuerelement zum Öffnen und Schließen von Ventilsitz und/oder Drosselspalt, einer Ankerstange mit einer Ankerachse zur Verbindung des Steuerelements mit einem Proportional-Magnet, welcher aus einem Magnetkern, einem Magnetanker und einer Magnetspule besteht. Der Magnetanker ist in Richtung der Ankerachse zwischen zwei Endpositionen hin- und herbewegbar, wobei die erste Endposition einer Halteposition des Magnetankers entspricht, d. h., daß der Magnetanker mittels des Steuerelements wenigstens einen Ventilsitz geschlossen hält.

Ventile der oben genannten Bauart sind aus dem Stand der Technik vielfach bekannt; sie werden beispielsweise als Vorsteuerventile zum Ansteuern von Kupplungen in automatischen Kraftfahrzeug-Schaltgetrieben verwendet. In derartigen Getrieben beträgt der hydraulische Hauptdruck, oder auch Systemdruck genannt, beispielsweise bei Pkw-Getrieben ca. 10 bar oder mehr. Dieser Hauptdruck wird üblicherweise durch ein Druckreduzierventil auf einen Vorsteuerdruck von ca. 5 bar reduziert, mit welchem auch das Proportional-Druckregelventil beaufschlagt wird. Um beispielsweise nach dem Einkuppeln einer Kupplung diese auch geschlossen zu halten, wird gewöhnlich ein Sicherheitsüberdruck, welcher in etwa dem Systemdruck entspricht, an dem Kupplungszylinder angelegt und durch zusätzliche Halteventile aufrechterhalten. Somit werden drei Ventile, nämlich ein Proportional-Druckregelventil, ein Druckreduzierventil und ein Druckhalteventil, zum Betrieb, beispielsweise einer Kupplung in einem Automatgetriebe, benötigt.

Aufgabe der vorliegenden Erfindung ist es, ein Ventil anzugeben, welches die oben genannten Funktionen erfüllt und dabei einen einfacheren Aufbau, beispielsweise durch weniger Bauteile, aufweist und somit kostengünstiger herstellbar ist.

Erfindungsgemäß wird diese Aufgabe dadurch gelöst, daß bei einem Proportional-Druckregelventil der vorgenannten Bauart in der Halteposition des Magnetankers der kleinste axiale Abstand zwischen den beiden gegenüber angeordneten Stirnseiten des Magnetankers und des Magnetkerns derart bemessen ist, daß die Magnetkraft zwischen dem Magnetanker und dem Magnetkern in dieser Halteposition größer ist als die Magnetkraft im Arbeitsbereich des Proportional-Magneten und daß der Magnetanker durch die überhöhte Magnetkraft in dieser Halteposition feststellbar ist. Die Erfindung macht sich dabei vorteilhafterweise die Tatsache zunutze, daß ein Proportional-Magnet in seinem Arbeitsbereich eine nahezu waagerechte Kraft-Hub-Kennlinie aufweist und die Magnetkraft in einem Bereich unterhalb eines bestimmten Hubes, d. h. eines Abstandes zwischen Magnetanker und Magnetkern, gegenüber der Magnetkraft im Arbeitsbereich sprunghaft ansteigt. Zum Stand der Technik siehe auch Mannesmann-Rexroth, Fluidtechnik von A bis Z, Der Hydraulik Trainer, Bd. 5, 04.95, Seite 266. Durch diese Magnetcharakteristik mit großen Magnetkräften bei geringen Luftspalten kann durch entsprechende Magnetauslegung ein Spulenstrom bzw. ein "Schnappstrom" eingestellt werden, bei welchem der Arbeitsbereich des Magneten überfahren und der Magnetanker im Bereich der hohen Magnetkraft gehalten wird. Durch die Verbindung des Magnetankers über die Ankerstange mit dem Steuerelement wird somit auch die Haltekraft an dem jeweils geschlossenen Ventilsitz des Steuerelements derart erhöht, so daß dieser Ventilsitz auch bei anstehendem Systemdruck größer ca. 10 bar zuverlässig dichtet. Daher kann mit dem erfindungsgemäßen Proportional-Druckregelventil sowohl das Druckreduzierventil als auch das Druckhalteventil vorteilhafterweise entfallen, da deren Funktionen von dem erfindungsgemäßen Ventil miterfüllt werden. Weiterhin weist ein derartiger Regler vorteilhafterweise eine hohe Druck-/Strom-(p/I-)Auflösung in seinem Feinregulierbereich zwischen 0 und ca. 5 bar auf. Ferner ermöglicht die erfindungsgemäße Haltefunktion vorteilhafterweise die Blockade schwingungsfähiger Massen im Druckregler; dieser ist somit schwingstabiler und unterliegt einem geringeren mechanischen Verschleiß.

In einer bevorzugten Weiterbildung der Erfindung weist das Steuerelement zwei Regelkanten auf, welche als Flachsitz und als Schieberkante ausgebildet sind. Damit kann auf einfache Weise eine kostengünstige Ausbildung, insbesondere eines 3/2-Wege-Druckreglers mit magnetischer Haltefunktion des Magnetankers, angegeben werden, wobei der Flachsitz zur Erfüllung der Druckhaltefunktion vorgesehen und der Druckregler vorteilhafterweise als Vorsteuerelement einsetzbar ist.

In einer Weiterbildung der Erfindung wird vorgeschlagen, daß zwischen dem Magnetanker und der Ankerstange ein Federelement, beispielsweise eine schraubenförmige Druckfeder, angeordnet ist. Dadurch wird zunächst erreicht, daß die Ankerstange den Magnetanker nicht direkt berührt und ferner eine statische Überbestimmtheit zwischen dem Flachsitz des Steuerelements und dem Endanschlag der Ankerstange an dem Anker kompensiert wird.

Vorteilhafterweise weist die Druckfeder, welche zwischen der Ankerstange und dem Magnetanker angeordnet ist, eine "harte" Federkennlinie auf, wodurch ein Überfahren des Proportional-Bereichs des Magneten erreicht sowie ein schnelles Umschalten des Magnetankers aus dem Arbeitsbereich in die Halteposition und eine Verstärkung des Schnappeffekts realisiert wird. Die Federkraft der Druckfeder ist dabei vorteilhafterweise derart gewählt, so daß sie größer oder gleich der maximalen, hydraulischen Regelkraft am Flachsitz ist. Diese maximale, hydraulische Regelkraft entspricht dem Produkt aus maximalem, hydraulischem Regeldruck mal Nennfläche des Flachsitzes. Vorteilhafterweise stellt somit die Feder einen "Durchschnappschutz" in dem hydraulischen System dar.

Die Federrate der Druckfeder ist vorteilhafterweise möglichst klein bemessen, damit schon bei einem geringen Spulenstrom der Magnetanker in den Bereich hoher Magnetkräfte bringbar und dadurch die Haltefunktion des Magnetankers realisierbar ist; der Magnetanker ist in dieser Position "durchgeschnappt".

Die Druckfeder ist ferner derart ausgebildet bezüglich ihrer Federkennlinie sowie ihrer Federgeometrie, wie beispielsweise der Federlänge, des Federdrahtdurchmessers usw., und die Befestigung der Feder zwischen dem Anker und der Ankerstange ist derart gewählt, so daß in der Halteposition des Magnetankers der kleinste axiale Abstand zwischen dem Magnetkern und dem Magnetanker in dem Bereich von 0 bis ca. 0,3 mm liegt, bevorzugt ca. ≤ 0,1 mm beträgt. Bei diesem Abstand ist die Magnetkraft ausreichend groß gegenüber der Magnetkraft im Arbeitsbereich, so daß der Magnetanker auch bei anliegendem hydraulischen Hauptdruck vorteilhafterweise in seiner Endposition gehalten wird.

Alternativ zu der vorgenannten Realisierung des geringsten Abstandes zwischen dem Magnetkern und dem Magnetanker kann eine Distanzscheibe aus einem unmagnetischen Werkstoff zwischen dem Magnetkern und dem Magnetanker angeordnet werden. Durch eine derartige Scheibe, welche ein "magnetisches Kleben" des Magnetankers an dem Magnetkern verhindert, wird durch unterschiedliche Ausbildung der Scheibendicke vorteilhafterweise eine einfache Einstellbarkeit der Magnetkraft möglich. Anstelle einer Distanzscheibe kann an dem Magnetkern und/oder an dem Magnetanker auch eine unmagnetische Beschichtung vorgesehen sein, welche die Einhaltung des axialen Abstandes zwischen dem Magnetkern und dem Anker sicherstellt.

In einer besonders vorteilhaften Ausbildung beträgt die Distanz zwischen den Stirnseiten des Magnetkerns und des Magnetankers ca. 0,01 bis 0,3 mm, bevorzugt jedoch ca. ≤ 0,1 mm, da bei dieser Distanz bereits eine ausreichende magnetische Haltekraft erreicht wird. Diese maximale magnetische Haltekraft muß über den gesamten Betriebsbereich des Druckregelventils größer sein als die hydraulische Kraft infolge des maximalen, hydraulischen Betriebsdruckes.

In einer weiteren Ausbildung der Erfindung wird vorgeschlagen, daß die Magnetspule mit einer elektrischen Steuereinrichtung verbunden ist, welche in vorgebbaren zeitlichen Abständen einen Stromimpuls an die Magnetspule zur Aufrechterhaltung der Halteposition des Magnetankers abgibt. Damit wird sichergestellt, daß der Magnetanker seine Halteposition relativ zum Magnetkern beibehält und nicht unbeabsichtigt aus der Halteposition "abfällt" und damit vorteilhafterweise der Dichtsitz des Steuerelements zuverlässig geschlossen bleibt.

Als vorteilhaft hat sich herausgestellt, daß der Stromimpuls eine Stromstärke aufweist, welche größer ist als der Haltestrom der Magnetspule und beispielsweise ca. 950 mA beträgt und daß der Stromimpuls in zeitlichen Abständen von beispielsweise ca. 20 ms erfolgt, da dieser Zeitraum kürzer bemessen ist als der Zeitraum, in welchem der Magnetanker aus seiner Halteposition abfallen könnte.

Zum beabsichtigten Lösen des Magnetankers aus der Halteposition wird die Magnetspule mit einem elektrischen Ansteuersignal beaufschlagt, welches beispielsweise durch Reduktion und anschließendes Hochfahren des Steuerstroms (Schleifenansteuerung) in der Magnetspule erfolgt. Damit kann auf einfache Weise ein Lösen des Ankers auf besonders elegante Art erfolgen.

Alternativ kann ein gewolltes Lösen des Magnetankers aus seiner Halteposition durch ein Drucksignal erfolgen, welches beispielsweise als eine Erhöhung des hydraulischen Hauptdrucks auf einen Wert oberhalb des Haltedrucks erfolgt und wobei die Druckerhöhung beispielsweise auf den Flachsitz des Steuerelements wirkt. Dadurch wird in vorteilhafter Weise durch eine Bewegung der Ankerstange auch ein Lösen des Magnetankers von dem Magnetkern erreicht.

Vorteilhafterweise wird das erfindungsgemäße Proportional-Druckregelventil als Vorsteuerventil verwendet. Dabei ist das Ventil bevorzugt als 3/2-Wege-Proportional-Druckregelventil mit einer magnetischen Haltefunktion des Magnetankers ausgebildet, so daß bei Verwendung des erfindungsgemäßen Ventils sowohl ein Druckreduzierventil als auch ein Druckhalteventil entfällt.

Alternativ kann das erfindungsgemäße Proportional-Druckregelventil auch als Direktsteuerventil verwendet werden, wobei der hydraulische Systemdruck durch das Proportional-Druckregelventil moduliert wird und anschließend direkt auf einen Volumen-Verstärkungsschieber, welcher keine Druckübersetzung aufweist, zur Ansteuerung einer Kupplung in einem Kraftfahrzeuggetriebe wirkt.

Das erfindungsgemäße Proportional-Druckregelventil kann somit sowohl als Vorsteuer- als auch als Direktsteuerventil in einer hydraulischen Anordnung mit einem Dämpfer mit einer zweistufigen Kennlinie verwendet werden. Diesem Dämpfer schließt sich ein Nachfolgeschieber in Form eines Druckübersetzungsschiebers bzw. eines Volumen-Verstärkungsschiebers zur Minimierung des Druckeinbruchs beim Übergang aus dem Haltebereich in den Arbeitsbereich an.

Weitere Ziele, Merkmale, Vorteile und Anwendungsmöglichkeiten der Erfindung ergeben sich aus der nachfolgenden Beschreibung der Ausführungsbeispiele, die in den Zeichnungen näher dargestellt sind.

Es zeigen:
- Fig. 1: ein 3/2-Wege-Proportional-Druckregelventil als Vorsteuerventil mit magnetischer Haltefunktion des Magnetankers in Closed-End-(CE-)Ausführung im Längsschnitt;
- Fig. 2: ein Proportional-Druckregelventil, ähnlich der Darstellung in Fig. 1, jedoch mit einer alternativen Verbindung zwischen Ankerstange und Magnetanker;
- Fig. 3: eine Kennlinie des Drucks p über dem Spulenstrom I für ein erfindungsgemäßes Ventil mit Haltefunktion in schematischer Darstellung;
- Fig. 4: Kennlinien für den Verlauf des Drucks p und der Durchflußmenge Q über dem Spulenstrom I als Meßdiagramm;
- Fig. 5: eine Magnetkraft-Hubkennlinie bei einem Proportional-Magnet in schematischer Darstellung;
- Fig. 6: eine Anordnung mit einem Proportional-Druckregelventil, einem zweistufigen Dämpfer und einem Volumen-Verstärkungsschieber in schematischer Darstellung;
- Fig. 7: einen zweistufigen Dämpfer in Schnitt-Darstellung;
- Fig. 8: eine Kennlinie der Dämpferkraft über dem Dämpferweg für einen zweistufigen Dämpfer gemäß Fig. 7 und
- Fig. 9: eine Kennlinie des Druckes P und des Spulenstroms I über der Zeit t in schematischer Darstellung.

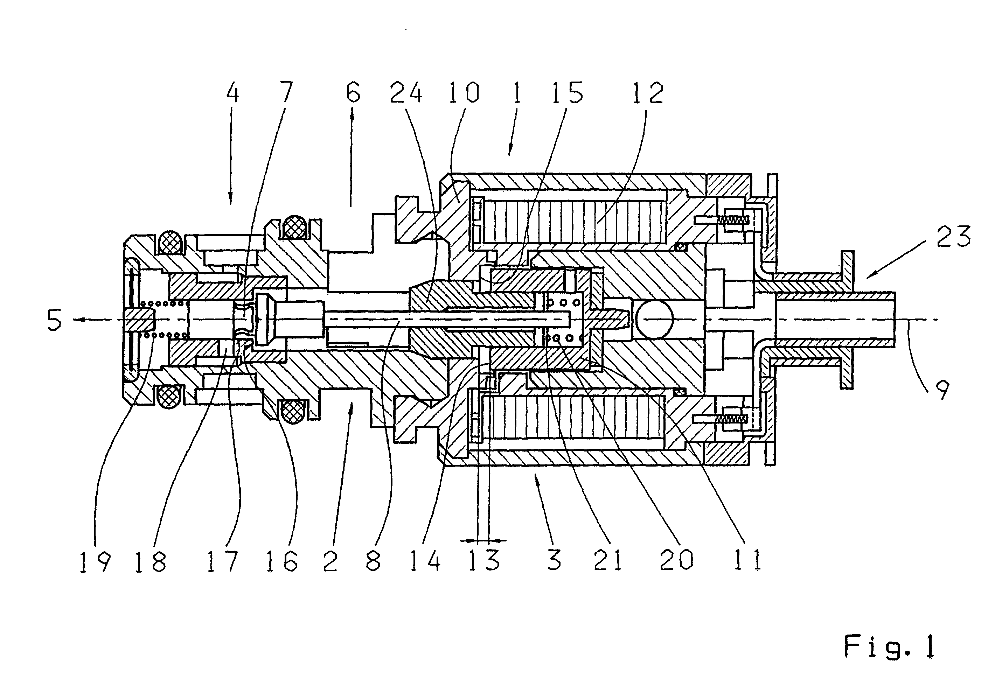

Das Druckregelventil 1 (Fig. 1) besteht im wesentlichen aus einem Ventilgehäuse 2 und einem Proportional-Magnet 3, wobei die Zu- und Ablauföffnungen 4, 5, 6 in dem unteren Teil des Ventilgehäuses 2 angeordnet sind. Ein Steuerelement 7 zum Öffnen und Schließen von Ventilsitz 16 und Schieberkante 17 ist mit einer Ankerstange 8 verbunden, welche eine Ankerachse 9 aufweist und wobei die Ankerstange 8 in einer Buchse 24 geführt ist und das eine Ende der Ankerstange 8 in den Innenraum eines Magnetankers 11 hineinragt. Der Magnetanker 11 bildet zusammen mit einem Magnetkern 10 und einer Magnetspule 12 den Proportional-Magnet 3.

Zur Verbindung des Steuerelements 7 mit dem Proportional-Magnet 3 ist eine Scheibe 21 an dem genannten Ende der Ankerstange 8 befestigt. Dieses Ende der Ankerstange 8 mit der Scheibe 21 ragt in eine im wesentlichen zylindrische Ausnehmung in den Magnetanker 11 hinein. Zwischen der Scheibe 21 und dem Boden der Ausnehmung in dem Anker 11 ist eine schraubenförmige Druckfeder 20 angeordnet. Dadurch wird eine starre Verbindung zwischen der Ankerstange 8 und dem Magnetanker 11 vermieden. In der hier gezeigten Darstellung gemäß Fig. 1 befindet sich der Magnetanker 11 in seiner zweiten Endposition, d. h. in der "oberen" Anschlagposition, so daß der Abstand 13 zwischen der Stirnseite 14 des Magnetankers 11 und der Stirnseite 15 des Magnetkerns 10 maximal ist. In der ersten Endposition, welche der erfindungsgemäßen Halteposition des Magnetankers 11 entspricht, beträgt der Abstand 13 ca. 0 bis 0,3 mm, bevorzugt ca. ≤ 0,1 mm.

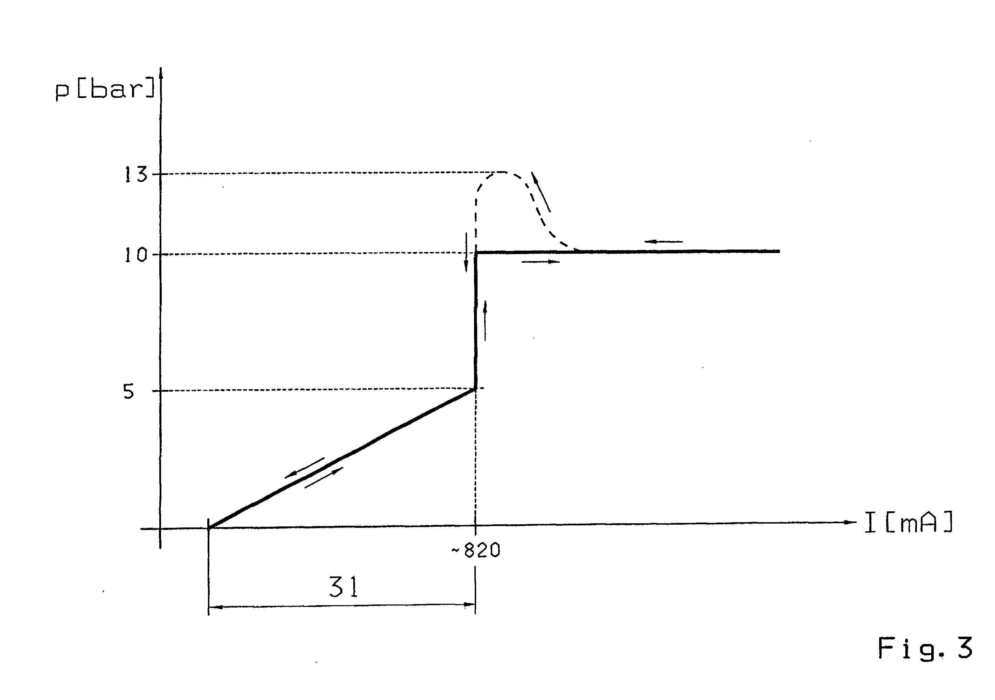

Das Steuerelement 7 wird somit von dem Magnetanker 11 über die Druckfeder 20 und die Scheibe 21 einerseits in seine erste "untere" Endposition bewegt. In dieser - nicht gezeigten - Halteposition ist der Flachsitz 16 geschlossen, so daß der an der Zulauföffnung 4 anstehende hydraulische Druck über die drei Bohrungen 18 nicht zu der Ablauföffnung 6 gelangen kann. Ein Öffnen des Flachsitzes 16 kann dadurch erreicht werden, daß der Steuerstrom der Magnetspule reduziert und dadurch auch die magnetische Haltekraft des Magnetankers 11 so weit zurückgenommen wird, daß der Magnetanker 11 von dem Magnetkern 10 gelöst wird. Anschließend wird der Steuerstrom sofort wieder hochgefahren (Schleifenansteuerung), so daß der "Druckeinbruch" beim Abfallen des Ankers nicht im Feinregulierbereich 31 (Fig. 3) spürbar wird. Auch kann der Flachsitz 16 dadurch geöffnet werden, indem der hydraulische Hauptdruck innerhalb der Zulauföffnung 4 und des Ringkanals 18 so weit erhöht wird, so daß die hydraulische Kraft auf die "untere" Ringfläche des Flachsitzes 16 größer ist als die magnetische Haltekraft, welche den Anker 11 auf dem Magnetkern 10 festhält.

Bei Verwendung eines Koaxialsteckers 23 kann das Proportional-Druckregelventil 1 mit einer nicht gezeigten elektrischen Steuereinrichtung verbunden werden.

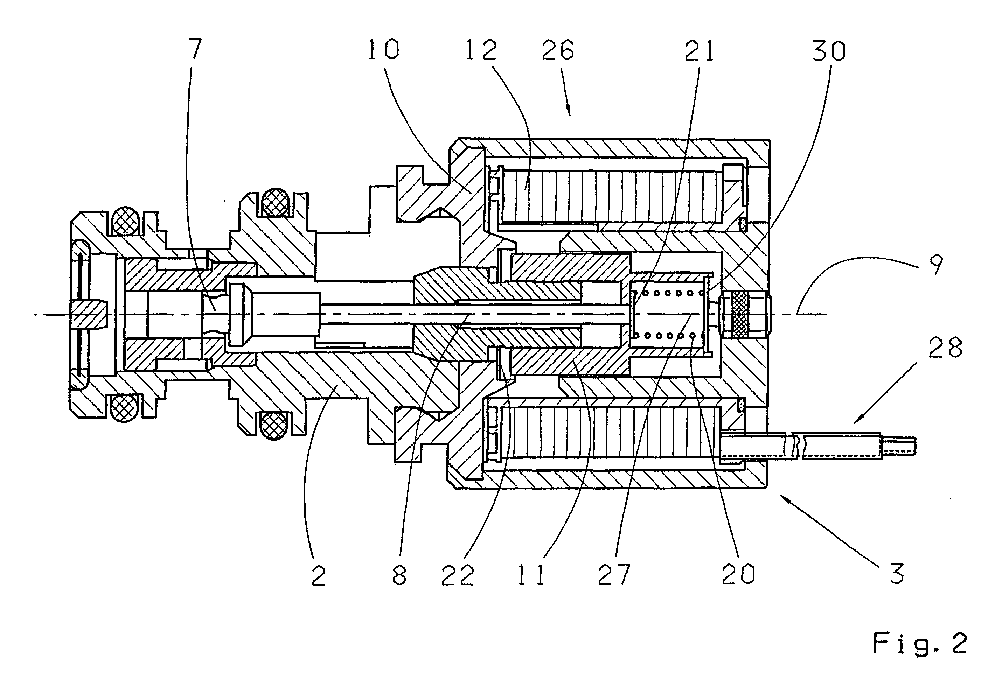

In einer alternativen Ausbildung gemäß Fig. 2 entspricht das hier dargestellte Ventil in seinen wesentlichen konstruktiven Merkmalen der Ausbildung gemäß Fig. 1, so daß dieselben Bauteile in den beiden Fig. 1 und 2 auch mit denselben Bezugszeichen gekennzeichnet sind. Unterschiedlich jedoch ist die Anbindung der Ankerstange 8 zu dem Magnetanker 11 ausgebildet. Hierzu ist der Magnetanker 11 auf seiner Oberseite mit einem topfförmigen Teil versehen, dessen offene Oberseite durch eine Verschlußscheibe 30 gekapselt ist, welche an dem Magnetanker 11 befestigt, beispielsweise mit diesem verstemmt, ist. In dem dadurch gebildeten, im wesentlichen zylindrischen Hohlraum ist eine Scheibe 21 untergebracht, die als Auflage für eine Druckfeder 20 dient. Zwischen dieser Scheibe 21 und der Verschlußscheibe 30 ist die Druckfeder 20 vorgesehen.

Die elektrische Zuleitung 28 verbindet die Magnetspule 12 mit einer nicht gezeigten elektrischen Steuereinrichtung.

Durch eine Erhöhung des Spulenstroms I (Fig. 3) erfolgt im Feinregulierbereich 31 eine lineare Erhöhung des Regeldrucks p bis zum Erreichen eines Vorsteuerdrucks von ca. 5 bar; bei diesem Wert ist eine beispielsweise durch das Ventil angesteuerte Kupplung geschlossen. Nach Erreichen des Vorsteuerdrucks und Anliegen eines Spulenstroms von ca. 820 mA erfolgt ein Stufensprung des Druckverlaufs bei konstantem Strom auf den Hauptdruck von ca. 10 bar. Nach dem Erreichen des Hauptdrucks erfolgt eine lineare Erhöhung des Spulenstroms I ohne weitere Druckveränderung. Dieser Sicherheitsüberdruck, dargestellt durch die Differenz zwischen 5 und 10 bar, stellt sicher, daß die Kupplung zuverlässig geschlossen bleibt. Dieser Überdruck wurde bislang nach dem Stand der Technik über Druckhalteventile geregelt; diese können nun entfallen, da die Druckhaltefunktion durch das Proportional-Druckregelventil selbst erfolgt. Ebenso entfallen kann ein Druckreduzierventil, welches den Druck bis zum Erreichen des Vorsteuerdrucks begrenzt. Das Verhalten des erfindungsgemäßen Ventils wird auch als "Schnappfunktion" bezeichnet, da das Magnetventil beim Erreichen des "Schnappstroms" von ca. 820 mA einen plötzlichen Drucksprung ausführt, wie der Fig. 3 zu entnehmen ist.

Ein Öffnen bzw. "Zurückschnappen" des Magnetventils kann beispielsweise dadurch erreicht werden, indem man eine Drucküberhöhung, beispielsweise auf den Systemdruck von ca. 13 bar, anlegt, welche auf den Flachsitz des Steuerelements wirkt und dadurch über die Ankerstange den Magnetanker von dem Magnetkern abhebt.

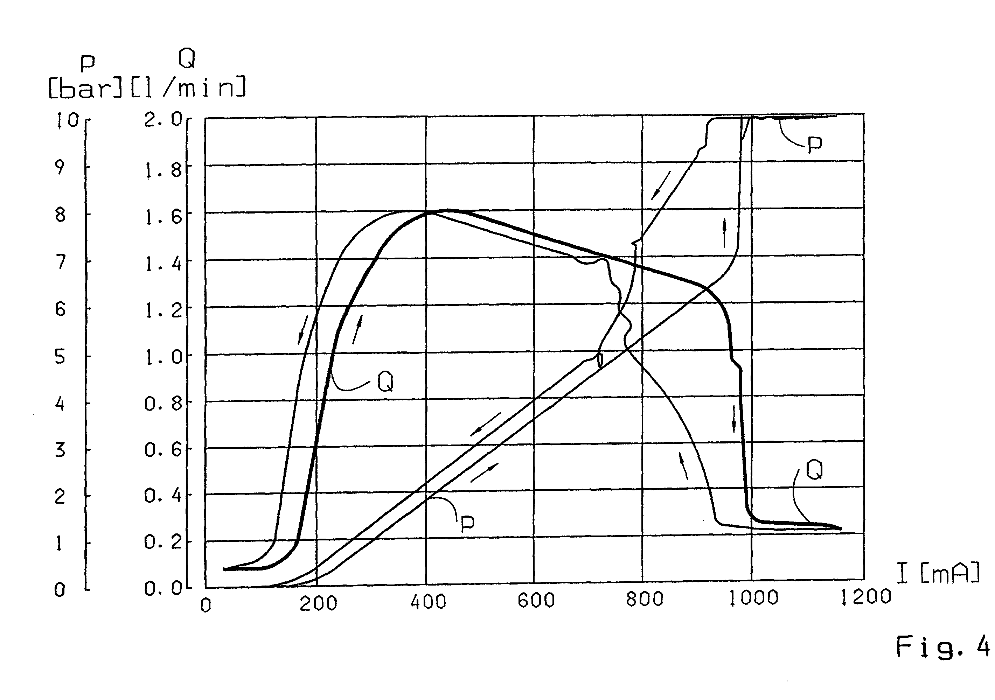

Zugrunde gelegt für die nachfolgende Messung (Fig. 4) ist ein Druckregler mit 12 V Betriebsspannung sowie einem Druckregelbereich von 0 bis 12 bar; die Messungen erfolgten während einer Zeitdauer von zweimal ca. 12 s. Der Restluftspalt, d. h. der Minimalabstand zwischen Magnetanker und Magnetkern, beträgt ca. 0,1 mm. Bei einem Verlauf der Meßwerte p und Q über I stellt man für den Druckverlauf große Ähnlichkeit mit der Darstellung in Fig. 3 fest. Bei zunehmendem Spulenstrom erfolgt oberhalb ca. 200 mA eine lineare Zunahme des Drucks bis auf ca. 6 bar. Im Anschluß erfolgt ein Drucksprung von ca. 6 auf ca. 10 bar bei einem "Schnappstrom" von ca. 950 mA. Bei der gezeigten Schleifenansteuerung erfolgt zunächst eine Überhöhung des Spulenstroms und eine anschließende Zurücknahme. Beim Erreichen eines I-Wertes von ca. 900 mA wird der Ventildruck in zwei Stufen auf ca. 5 bar reduziert. Anschließend erfolgt eine lineare Reduzierung des Drucks p entlang einer Linie parallel zur Druckerhöhung.

Der Verlauf der Durchflußmenge Q folgt ebenfalls einer Schleife, wobei jedoch der Verlauf der Durchflußmenge Q von dem des Druckverlaufs p verschieden ist. Mit zunehmendem Spulenstrom I erfolgt zunächst eine starke Erhöhung der Durchflußmenge bis auf ein Maximum von ca. 1,6 l/min. Bei weiterer Erhöhung des Spulenstroms erfolgt eine stufenweise Reduzierung der Durchflußmenge Q bis auf einen Wert von ca. 0,2 l/min, welcher einer Restleckage des Flachsitzes entspricht. Dieser Wert ist durch die hohe magnetische Haltekraft bzw. Anpreßkraft des Flachsitzes erfindungsgemäß sehr viel geringer als bei Serienventilen mit Flachsitz. Der Verlauf der Durchflußmenge Q bei Zurücknahme des Spulenstroms I erfolgt im wesentlichen parallel, jedoch oberhalb des Verlaufs für die Durchflußmenge Q bei Erhöhung des Stromes I.

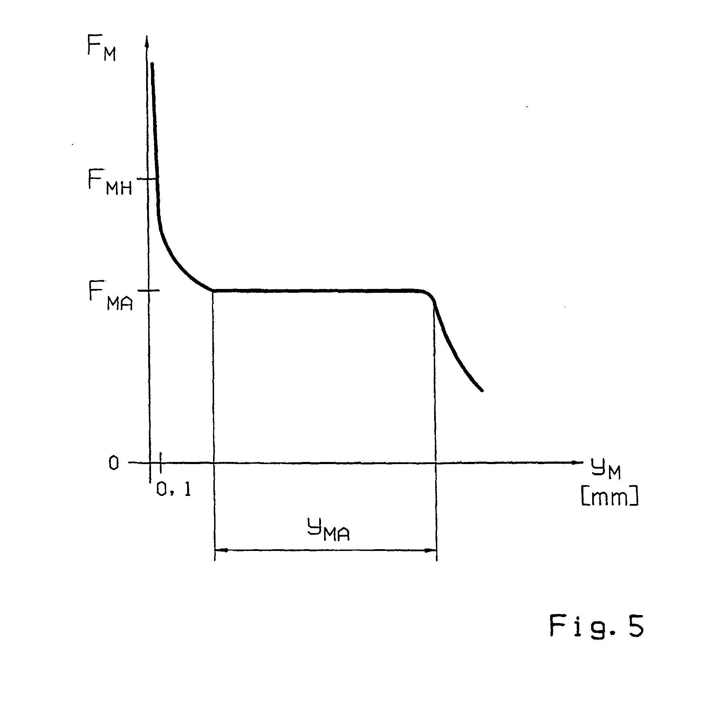

Wie eingangs bereits erwähnt, ist dem Stand der Technik zu entnehmen (Fig. 5), daß ein Proportional-Magnet in seinem Arbeitsbereich Y_MA eine nahezu waagerechte Kraft-Hub-Kennlinie aufweist. In dem Arbeitsbereich Y_MA ist die Magnetkraft F_MA daher im wesentlichen konstant. Bei weiter zunehmendem Hub Y_M verringert sich die Magnetkraft F_M. Bei abnehmendem bzw. geringem Hub Y_M erhöht sich die Magnetkraft F_M stark. Bei einem Hub Y_M von ca. 0,1 mm weist die Magnetkraft F_MH im Haltebereich einen signifikant höheren Wert auf als die Magnetkraft F_MA im Arbeitsbereich. Diese Tatsache macht sich die Erfindung zunutze, indem der Magnetanker des Proportional-Magneten durch eine Stromerhöhung der Magnetspule von dem Magnetkern angezogen wird und somit eine deutliche Erhöhung der Schließkraft am Flachsitz des Ventils erzeugt.

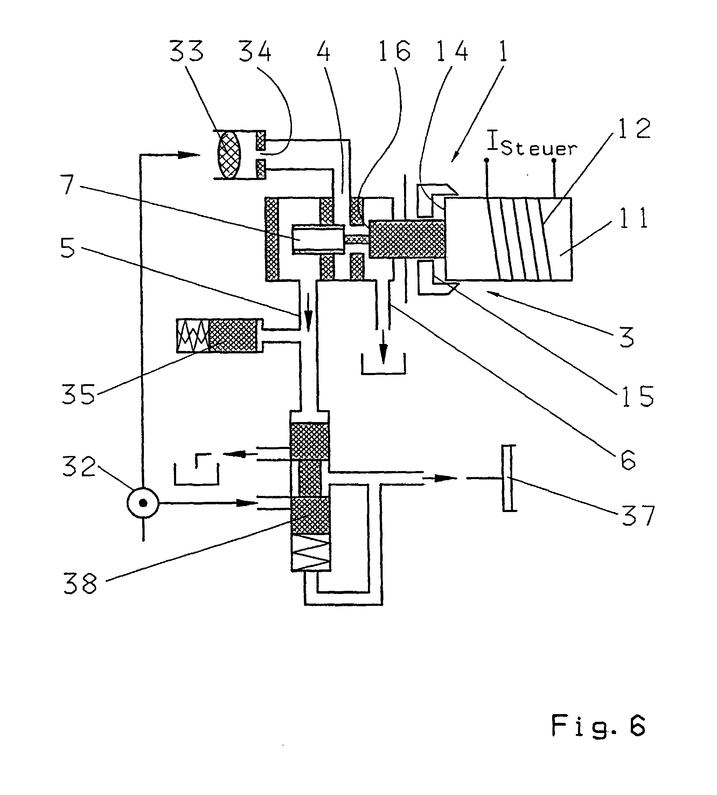

In einer hydraulischen Anordnung (Fig. 6) wird mittels einer Pumpe 32 ein hydraulischer Systemdruck in einem Hydraulikfluid erzeugt. Dieses wird durch einen Filter 33 und eine Blende 34 zu einer Zulauföffnung 4 des Druckregelventils 1 gepumpt. Das Ventil 1 entspricht in seiner Funktion im wesentlichen der Darstellung in Fig. 1. Über den Arbeitsanschluß 5 des Druckregelventils 1 ist dieses mit einem Nachfolgeschieber, beispielsweise einem Volumenstrom-Verstärkungsschieber 38, verbunden. Zwischen dem Druckregelventil 1 und dem Nachfolgeschieber 38 ist ein zweistufiger Dämpfer 35 angeordnet. Der Schieber 38 ist mit einer Kupplung 37 verbunden.

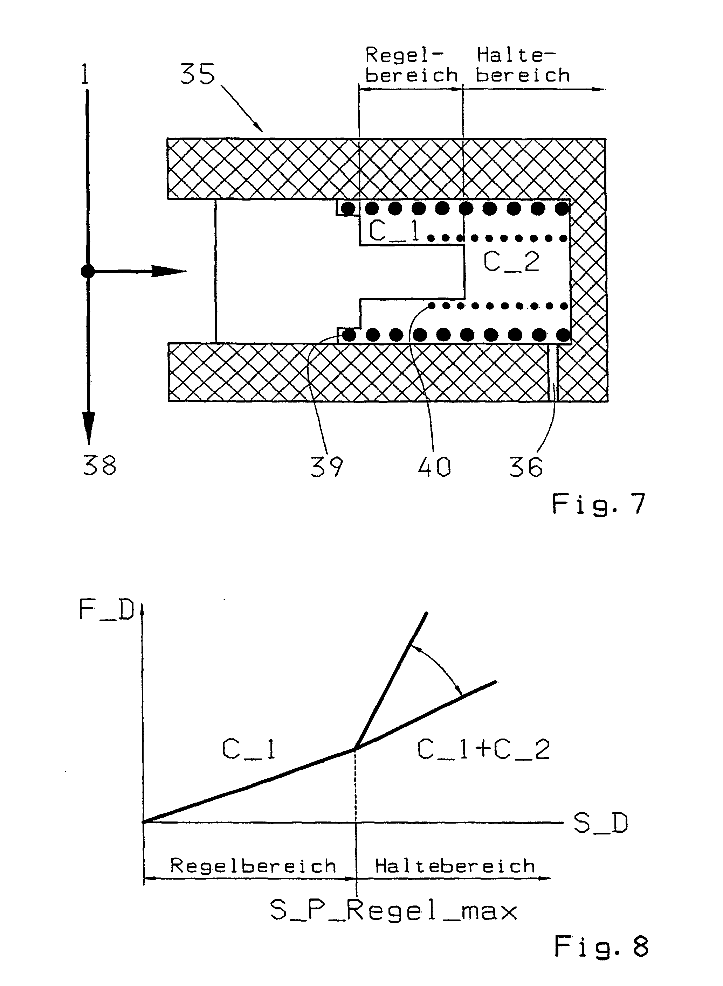

Der zweistufige Dämpfer 35 ist nochmals in schematischer und vergrößerter Darstellung in Fig. 7 dargestellt. Der Zulauf zu dem Dämpfer 35 erfolgt von dem Druckregelventil 1; der Ablauf erfolgt zu dem Nachfolgeschieber bzw. Volumenstrom-Verstärkungsschieber 38. Der Dämpfer 35 besteht im wesentlichen aus einem topfförmigen Dämpfergehäuse mit einer Blendenbohrung 36. Im Inneren des Dämpfers befindet sich eine Druckfeder 39 mit einer Federkonstanten C1 sowie eine zweite Druckfeder 40 mit einer Federkonstanten C2. Die beiden Federn 39 und 40 sind dabei derart aufeinander abgestimmt, so daß im Regelbereich zunächst die Feder 39 mit der Federkonstanten C1 komprimiert wird. Nach dem Übergang aus dem Regelbereich in den Haltebereich erfolgt die Dämpfung mittels einer Kombination der beiden Federn 39 und 40.

Bei einem Verlauf der Dämpferkraft F_D über dem Dämpferweg S_D (Fig. 8) ergibt sich zunächst in dem Regelbereich ein linearer Anstieg gemäß der Federrate C1 bis zu dem Federweg S_P_Regel_max, bei welchem der maximale Regeldruck erreicht ist. In dem sich danach anschließenden Haltebereich summiert sich die Gesamtfederrate des Dämpfers aus den Einzelfederraten C1 und C2, wobei die Steigung der Kennlinie durch eine beliebige Kombination der beiden Federraten variabel gestaltet werden kann.

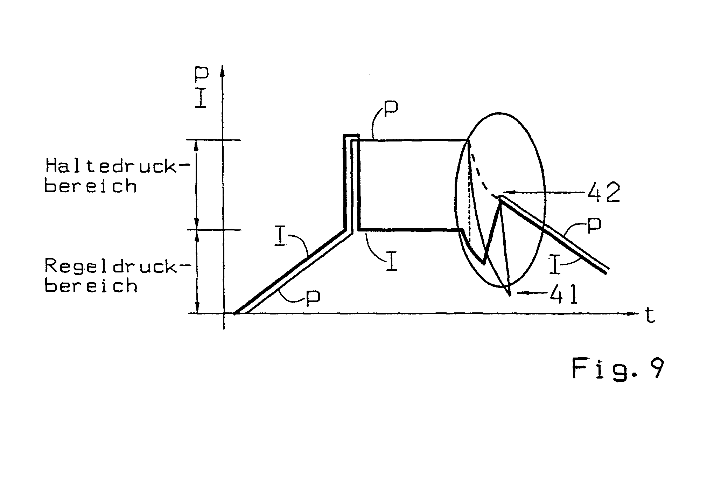

Die Auswirkungen eines vorgenannten zweistufigen Dämpfers auf den Druckeinbruch in einem erfindungsgemäßen Druckregelventil sind in Fig. 9 dargestellt. Durch eine lineare Erhöhung des Spulenstroms I erfolgt zunächst im wesentlichen zeitgleich eine lineare Erhöhung des Druckes p in dem Regeldruckbereich. Anschließend erfolgt ein sprungartiger Anstieg sowohl des Spulenstroms I als auch des Druckes p bis auf den Systemdruck. Bis zum Erreichen des, vergrößert dargestellten Verlaufs des Druckeinbruchs wird der Druck p in etwa konstant auf Haltedruckniveau gehalten, während der Spulenstrom I auch Stromimpulse, sogenannte Refresh-Peaks, welche der Einfachheit halber nicht dargestellt sind, zur Aufrechterhaltung der Haltefunktion aufweist.

In dem vergrößert dargestellten Zeitfenster, welches beispielsweise einem Zeitraum von ca. 50 msec entspricht, wird zunächst der Strom I zurückgenommen, wodurch auch der Druckverlauf p von seinem Haltedruck bis zum Druckeinbruchspunkt 41 absinkt. Durch eine schnelle Anhebung des Spulenstroms I wird der Verlauf des Druckes p wieder "eingefangen" und kontrolliert in den Regeldruckbereich zurückgefahren. Dies entspricht einem Verlauf mit einem herkömmlichen Dämpfer.

Bei Verwendung eines erfindungsgemäßen zweistufigen Dämpfers wird der Druckeinbruch signifikant verringert, so daß der Druckverlauf p bereits bei einem Druckeinbruchspunkt 42 oberhalb des Regeldruckbereichs bereits eingefangen wird und anschließend kontrolliert in den Regeldruckbereich zurückgeführt werden kann.

### Bezugszeichen

- 1: Druckregelventil
- 2: Ventilgehäuse
- 3: Proportional-Magnet
- 4: Zulauföffnung
- 5: Arbeitsanschluß
- 6: Ablauföffnung
- 7: Steuerelement
- 8: Ankerstange
- 9: Ankerachse
- 10: Magnetkern
- 11: Magnetanker
- 12: Magnetspule
- 13: Abstand
- 14: Stirnseite Magnetanker
- 15: Stirnseite Magnetkern
- 16: Flachsitz
- 17: Schieberkante
- 18: Bohrung
- 19: Feder
- 20: Druckfeder
- 21: Scheibe
- 22: Distanzscheibe
- 23: Koaxialstecker
- 24: Buchse
- 26: Druckregelventil
- 27: Schaltweg
- 28: Zuleitung
- 30: Verschlußscheibe
- 31: Feinregulierbereich
- 32: Pumpe
- 33: Filter
- 34: Blende
- 35: Dämpfer, zweistufig
- 36: Blende
- 37: Kupplung
- 38: Nachfolgeschieber (Volumenstromverstärker, Druckübersetzer)
- 39: Feder
- 40: Feder
- 41: Druckeinbruch
- 42: Druckeinbruch

- F_M: Magnetkraft
- F_MH: Magnetkraft Haltebereich
- F_MA: Magnetkraft Arbeitsbereich
- F_Feder: Federkraft
- F_max_Regel: maximale, hydraulische Regelkraft
- F_D: Dämpferkraft
- Y_M: Magnethub
- Y_MA: Arbeitsbereich
- p: Druck
- p_Sys: Systemdruck
- I: Strom
- Q: Durchfluß
- S_D: Dämpfung
- C: Federrate

## Patentansprüche

1. Proportional-Druckregelventil mit
- einem Ventilgehäuse (2) mit Zu- und Ablauföffnungen (4, 5, 6),
- einem Steuerelement (7) zum Öffnen und Schließen von Ventilsitz (16) und/oder Drosselspalt,
- einer Ankerstange (8) mit einer Ankerachse (9) zur Verbindung des Steuerelements (7) mit
- einem Proportional-Magnet (3), welcher aus einem Magnetkern (10), einem Magnetanker (11) und einer Magnetspule (12) besteht, wobei der Magnetanker (11) in Richtung der Ankerachse (9) zwischen zwei Endpositionen hin- und herbewegbar ist und die erste Endposition einer Halteposition des Magnetankers (11) entspricht und der Proportional-Magnet (3) in seinem Arbeitsbereich (Y_MA) eine nahezu konstante Magnetkraft (F_MA) aufweist,
**dadurch gekennzeichnet, daß** in der Halteposition der kleinste axiale Abstand (13) zwischen den beiden gegenüber angeordneten Stirnseiten (14, 15) des Magnetankers (11) und des Magnetkerns (10) derart bemessen ist, daß die Magnetkraft (F_MH) zwischen dem Magnetanker (11) und dem Magnetkern (10) in dieser Halteposition größer ist als die Magnetkraft (F_MA) im Arbeitsbereich (Y_MA) des Proportional-Magneten (3) und der Magnetanker (11) durch die Magnetkraft (F_MH) in dieser Halteposition feststellbar ist.

2. Proportional-Druckregelventil nach Anspruch 1, **dadurch gekennzeichnet, daß** das Steuerelement (7) zwei Regelkanten aufweist, welche als Flachsitz (16) und als Schieberkante (17) ausgebildet sind.

3. Proportional-Druckregelventil nach den Ansprüchen 1 oder 2, **dadurch gekennzeichnet, daß** zwischen dem Magnetanker (11) und der Ankerstange (8) ein Federelement, beispielsweise eine schraubenförmige Druckfeder (20), angeordnet ist, so daß die Ankerstange (8) den Magnetanker (11) im Feinregulierbereich (31) nicht berührt.

4. Proportional-Druckregelventil nach Anspruch 3, **dadurch gekennzeichnet, daß** die Druckfeder (20) eine Federkraft (F_Feder) aufweist, welche größer oder gleich der maximalen, hydraulischen Regelkraft (F_max_Regel) am Flachsitz (16) ist.

5. Proportional-Druckregelventil nach Anspruch 4, **dadurch gekennzeichnet, daß** die Druckfeder (20) eine möglichst kleine Federrate (C) aufweist, die so bemessen ist, daß schon bei einem geringen Spulenstrom (I) der Magnetanker (11) in den Bereich hoher Magnetkräfte (F_MH) bringbar und dadurch eine Haltefunktion realisierbar ist.

6. Proportional-Druckregelventil nach einem der Ansprüche 1 bis 5, **dadurch gekennzeichnet, daß** die Ankerstange (8), der Magnetanker (11) und die Druckfeder (20) derart ausgebildet und befestigt sind, so daß in der Halteposition der axiale Abstand (13) zwischen dem Magnetkern (10) und dem Magnetanker (11) in den Bereich von 0 bis ca. 0,3 mm liegt, bevorzugt ca. ≤ 0,1 mm beträgt und somit die Haltekraft durch die Länge der Ankerstange (8) einstellbar ist.

7. Proportional-Druckregelventil nach einem der Ansprüche 1 bis 5, **dadurch gekennzeichnet, daß** zwischen dem Magnetkern (10) und dem Magnetanker (11) eine Distanzscheibe (22) aus einem unmagnetischen Werkstoff oder an dem Magnetkern (10) und/oder dem Magnetanker (11) eine unmagnetische Beschichtung zur Einhaltung eines axialen Abstandes (13) vorgesehen ist.

8. Proportional-Druckregelventil nach Anspruch 7, **dadurch gekennzeichnet, daß** die Distanz zwischen den Stirnseiten des Magnetkerns (10) und des Magnetankers (11) ca. 0,01 bis 0,3 mm, bevorzugt ca. ≤ 0,1 mm, beträgt.

9. Proportional-Druckregelventil nach einem der vorangehenden Ansprüche, **dadurch gekennzeichnet, daß** die Magnetspule (12) mit einer elektrischen Steuereinrichtung verbunden ist, welche in vorgebbaren zeitlichen Abständen einen Stromimpuls an die Magnetspule (12) zur Aufrechterhaltung der Halteposition des Magnetankers (11) abgibt.

10. Proportional-Druckregelventil nach Anspruch 9, **dadurch gekennzeichnet, daß** der Stromimpuls eine Stromstärke aufweist, welche größer ist als der Haltestrom der Magnetspule (12) und beispielsweise ca. 950 mA beträgt und daß der Stromimpuls in zeitlichen Abständen von beispielsweise ca. 20 ms erfolgt.

11. Proportional-Druckregelventil nach einem der Ansprüche 1 bis 10, **dadurch gekennzeichnet, daß** zum Lösen des Magnetankers (11) aus der Halteposition die Magnetspule (12) ein elektrisches Ansteuersignal erhält, welches beispielsweise als Schleifenansteuerung durch Reduktion und anschließendes Hochfahren des Steuerstroms der Magnetspule (12) erfolgt.

12. Proportional-Druckregelventil nach einem der Ansprüche 1 bis 10, **dadurch gekennzeichnet, daß** zum Lösen des Magnetankers (11) aus der Halteposition ein Drucksignal erfolgt, welches beispielsweise als eine Erhöhung des hydraulischen Hauptdrucks auf einen Wert oberhalb des Haltedrucks erfolgt, und die Druckerhöhung beispielsweise auf den Flachsitz (16) des Steuerelements (7) wirkt.

13. Proportional-Druckregelventil nach einem der vorangehenden Ansprüche, **gekennzeichnet durch** die Verwendung als Vorsteuerventil.

14. Proportional-Druckregelventil nach einem der Ansprüche 1 bis 12, **gekennzeichnet durch** die Verwendung als Direktsteuerventil, wobei der Systemdruck (p_Sys) **durch** das Proportional-Druckregelventil (1) moduliert wird und direkt auf einen Volumen-Verstärkungsschieber (36) zur Ansteuerung einer Kupplung (37) wirkt.

15. Proportional-Druckregelventil nach einem der vorangehenden Ansprüche, **gekennzeichnet durch** die Verwendung als Vorsteuer- oder Direktsteuerventil in einer hydraulischen Anordnung mit einem Dämpfer (35) mit einer zweistufigen Kennlinie und einem Druckübersetzungsschieber bzw. einem Volumen-Verstärkungsschieber (38) zur Minimierung des Druckeinbruchs beim Übergang aus dem Haltein den Arbeitsbereich.

## Claims

1. Proportional pressure control valve comprising
- a valve housing (2) with inlet and outlet openings (4, 5, 6) ,
- a control element (7) for the opening and closing of valve seat (16) and/or throttle gap,
- an armature rod (8) with an armature axis (9) for connecting the control element (7) comprising
- a proportional magnet (3), which comprises a magnet core (10), a magnet armature (11) and a magnet coil (12), wherein the magnet armature (11) is movable in the direction of the armature axis (9) back and forth between two end positions and the first end position corresponds to a holding position of the magnet armature (11) and the proportional magnet (3) in its working range (Y_MA) has an almost constant magnetic force (F_MA),
**characterized in that** in the holding position the smallest axial clearance (13) between the two opposing end faces (14, 15) of the magnet armature (11) and of the magnet core (10) is dimensioned in such a way that the magnetic force (F_MH) between the magnet armature (11) and the magnet core (10) in said holding position is greater than the magnetic force (F_MA) in the working range (Y_MA) of the proportional magnet (3) and the magnet armature (11) is lockable in said holding position by the magnetic force (F_MH).

2. Proportional pressure control valve according to claim 1, **characterized in that** the control element (7) comprises two control edges, which are designed as flat seat (16) and as slide valve edge (17).

3. Proportional pressure control valve according to claims 1 or 2, **characterized in that** a spring element, e.g. a helical compression spring (20), is disposed between the magnet armature (11) and the armature rod (8) so that the armature rod (8) is not in contact with the magnet armature (11) in the fine regulation range (31).

4. Proportional pressure control valve according to claim 3, **characterized in that** the compression spring (20) has a spring action (F_Feder), which is greater than or equal to the maximum hydraulic control force (F_max_Regel) on the flat seat (16).

5. Proportional pressure control valve according to claim 4, **characterized in that** the compression spring (20) has as low a spring rate (C) as possible, which is so dimensioned that already with a low coil current (I) the magnet armature (11) is movable into the range of high magnetic forces (F_MH) and hence a holding function is realizable.

6. Proportional pressure control valve according to one of claims 1 to 5, **characterized in that** the armature rod (8), the magnet armature (11) and the compression spring (20) are designed and fastened in such a way that in the holding position the axial clearance (13) between the magnet core (10) and the magnet armature (11) is in the range of 0 to ca. 0.3 mm, in a preferred manner ca. ≤ 0.1 mm, and so the holding force is adjustable by means of the length of the armature rod (8).

7. Proportional pressure control valve according to one of claims 1 to 5, **characterized in that** a spacer disk (22) made of a non-magnetic material is provided between the magnet core (10) and the magnet armature (11) or a non-magnetic coating is provided on the magnet core (10) and/or the magnet armature (11) for maintaining the axial clearance (13).

8. Proportional pressure control valve according to claim 7, **characterized in that** the distance between the end faces of the magnet core (10) and of the magnet armature (11) is ca. 0.01 to 0.3 mm, in a preferred manner ca. ≤ 0.1 mm.

9. Proportional pressure control valve according to one of the preceding claims, **characterized in that** the magnet coil (12) is connected to an electric control device, which at preselectable time intervals delivers a current pulse to the magnet coil (12) for maintaining the holding position of the magnet armature (11).

10. Proportional pressure control valve according to claim 9, **characterized in that** the current pulse has a current intensity, which is greater than the holding current of the magnet coil (12) and is e.g. ca. 950 mA and that the current pulse occurs at time intervals of e.g. ca. 20 ms.

11. Proportional pressure control valve according to one of claims 1 to 10, **characterized in that** for releasing the magnet armature (11) from the holding position the magnet coil (12) receives an electrical trigger signal, which is effected e.g. in the form of loop activation by reducing and subsequently increasing the control current of the magnet coil (12).

12. Proportional pressure control valve according to one of claims 1 to 10, **characterized in that** for releasing the magnet armature (11) from the holding position a pressure signal occurs, which is effected e.g. in the form of an increase of the hydraulic main pressure up to a value above the holding pressure, and the pressure increase acts e.g. upon the flat seat (16) of the control element (7).

13. Proportional pressure control valve according to one of the preceding claims, **characterized by** the use as a pilot control valve.

14. Proportional pressure control valve according to one of claims 1 to 12, **characterized by** the use as a direct control valve, wherein the system pressure (p_Sys) is modulated by the proportional pressure control valve (1) and acts directly upon a volume-boosting slide valve (36) for activating a clutch (37).

15. Proportional pressure control valve according to one of the preceding claims, **characterized by** the use as a pilot control valve or direct control valve in a hydraulic arrangement having a damper (35) with a two-stage characteristic curve and having a pressure-transforming slide valve and/or a volume-boosting slide valve (38) for minimizing the inrush of pressure during the transition from the holding range to the working range.

## Revendications

1. Soupape de régulation de pression proportionnelle comprenant :
- un corps de soupape (2) comportant des ouvertures d'arrivée et d'écoulement (4, 5, 6),
- un élément de commande (7) destiné à ouvrir et fermer un siège de soupape (16) et/ou une fente d'étranglement,
- une tige d'armature (8) comportant un axe d'armature (9), destinée à être reliée à l'élément de commande (7), et qui comprend,
- un électro-aimant proportionnel (3) qui est composé d'un noyau d'électro-aimant (10), d'une armature d'électro-aimant (11) et d'une bobine d'électro-aimant (12), l'armature d'électro-aimant (11) pouvant se déplacer selon la direction de l'axe (9) de l'armature en va-et-vient entre deux positions extrêmes, et la première position extrême correspondant à une position de retenue de l'armature d'électro-aimant (11) et l'électro-aimant proportionnel (3) présentant une force magnétique (F_MA) à peu près constante dans sa zone de travail (Y_MA),
**caractérisée en ce que**, dans la position d'arrêt, l'écartement axial (13) minimal entre les deux faces frontales (14, 15) de l'armature d'électro-aimant (11) et du noyau d'électro-aimant (10) qui se font face est calculé de telle manière que la force magnétique (F_MH) entre l'armature d'électro-aimant (11) et le noyau d'électro-aimant (10) dans cette position d'arrêt soit plus grande que la force magnétique (F_MA) dans la zone de travail (Y_MA) de l'électro-aimant proportionnel (3) et que l'armature d'électro-aimant (11) puisse être immobilisée dans cette position de retenue par la force magnétique (F_MH).

2. Soupape de régulation de pression proportionnelle selon la revendication 1, **caractérisée en ce que** l'élément de commande (7) comporte deux arêtes de réglage qui sont constituées par un siège plat (16) et une arête de tiroir (17).

3. Soupape de régulation de pression proportionnelle selon les revendications 1 ou 2, **caractérisée en ce qu'**un élément élastique, par exemple un ressort de compression hélicoïdal (20) est disposé entre l'armature d'électro-aimant (11) et la tige d'armature (8), de manière que la tige d'armature (8) ne touche pas l'armature d'électro-aimant (11) dans la zone de réglage fin (31).

4. Soupape de régulation de pression proportionnelle selon la revendication 3, **caractérisée en ce que** le ressort de compression (20) a une force élastique (F_Feder) qui est supérieure ou égale à la force de régulation hydraulique maximale (F_max_ Regel) au niveau du siège plat (16).

5. Soupape de régulation de pression proportionnelle selon la revendication 4, **caractérisée en ce que** le ressort de compression (20) a une caractéristique élastique (C) aussi petite que possible, qui est calculée de manière que, déjà en présence d'un petit courant de bobine (I), l'armature d'électro-aimant (11) puisse être placée dans la zone de grande force magnétique (F_MH) et que, de cette façon, une fonction de retenue puisse être réalisée.

6. Soupape de régulation de pression proportionnelle selon l'une des revendications 1 à 5, **caractérisée en ce que** la tige d'armature (8), l'armature d'électro-aimant (11) et le ressort de compression (20) sont construits et fixés de manière que, dans la position d'arrêt, l'écartement axial (13) entre le noyau d'électro-aimant (10) et l'armature d'électro-aimant (11) soit compris entre 0 et 0,3 mm environ, et de préférence ≤ 0,1 mm environ et que, de cette façon, la force de retenue puisse être réglée par la longueur de la tige d'armature (8).

7. Soupape de régulation de pression proportionnelle selon l'une des revendications 1 à 5, **caractérisée en ce qu'**une rondelle d'écartement (22) faite d'une matière non magnétique est prévue entre le noyau d'électro-aimant (10) et l'armature d'électro-aimant (11), ou **en ce qu'**un revêtement non magnétique est prévu sur le noyau d'électro-aimant (10) et/ou l'armature d'électro-aimant (11) pour maintenir l'écartement axial (13).

8. Soupape de régulation de pression proportionnelle selon la revendication 7, **caractérisée en ce que** la distance entre les faces frontales du noyau d'électro-aimant (10) et de l'armature d'électro-aimant (11) est de 0,01 à 0, 3 mm environ, et de préférence ≤ 0,1 mm environ.

9. Soupape de régulation de pression proportionnelle selon l'une des revendications précédentes, **caractérisée en ce que** la bobine d'électro-aimant (12) est reliée à un dispositif de commande électrique qui, à des intervalles de temps pouvant être prédéterminés, délivre une impulsion de courant à la bobine d'électro-aimant (12) pour le maintien de la position d'arrêt de l'armature d'électro-aimant (11).

10. Soupape de régulation de pression proportionnelle selon la revendication 9, **caractérisée en ce que** l'impulsion de courant présente une intensité qui est plus grande que le courant d'arrêt de la bobine d'électro-aimant (12) et est égale, par exemple à 950 mA environ, et **en ce que** l'impulsion de courant a lieu à des intervalles de temps, par exemple, de 20 ms environ.

11. Soupape de régulation de pression proportionnelle selon l'une des revendications 1 à 10, **caractérisée en ce que**, pour libérer l'armature d'électro-aimant (11) de la position d'arrêt, la bobine d'électro-aimant (12) reçoit un signal de commande électrique qui se produit, par exemple, sous la forme d'une commande en boucle par réduction et élévation consécutive du courant de commande de la bobine d'électro-aimant (12).

12. Soupape de régulation de pression proportionnelle selon l'une des revendications 1 à 10, **caractérisée en ce que**, pour libérer l'armature d'électro-aimant (11) de la position d'arrêt, il se produit un signal de pression qui se produit, par exemple, sous la forme d'une élévation de la pression principale hydraulique jusqu'à une valeur supérieure à la pression de retenue, et l'élévation de pression agit, par exemple, sur le siège plat (16) de l'élément de commande (7).

13. Soupape de régulation de pression proportionnelle selon l'une des revendications précédentes, **caractérisée par** son emploi en qualité de soupape pilote.

14. Soupape de régulation de pression proportionnelle selon l'une des revendications 1 à 12, **caractérisée par** son emploi en qualité de. soupape de commande directe, auquel cas la pression de système (p_Sys) est modulée par la soupape de régulation de pression proportionnelle (1) et agit directement sur un tiroir de renforcement du volume (36) destiné à la commande d'un embrayage (37).

15. Soupape de régulation de pression proportionnelle selon l'une des revendications précédentes, **caractérisée par** son emploi en qualité de soupape pilote ou de soupape de commande directe dans un dispositif hydraulique comprenant un amortisseur (35) qui a une caractéristique à deux étages et un tiroir élévateur de pression ou un tiroir de renforcement du volume (38) destiné à réduire au minimum la chute de pression au moment du passage de la zone d'arrêt à la zone de travail.
